(19)

**Europäisches Patentamt**

**European Patent Office**

**Office européen des brevets**

(11) **EP 3 618 377 A1**

(12) **EUROPEAN PATENT APPLICATION**

(43) Date of publication:
04.03.2020 Bulletin 2020/10

(21) Application number: 18191486.2

(22) Date of filing: 29.08.2018

(51) Int Cl.:
**H04L 25/06** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Intel IP Corporation
Santa Clara, CA 95054 (US)**

(72) Inventors:
• **EDER, Franz
85579 Neubiberg (DE)**

• **SCHERB, Ansgar
91207 Nürnberg (DE)**
• **GORI, Silvano
80639 Munich (DE)**
• **MUELLER-WEINFURTNER, Stefan
90409 Nürnberg (DE)**

(74) Representative: **Viering, Jentschura & Partner
mbB
Patent- und Rechtsanwälte
Am Brauhaus 8
01099 Dresden (DE)**

(54) **COMMUNICATION DEVICE AND METHOD FOR PROCESSING A RECEIVED SIGNAL**

(57) According to various embodiments, a communication device is described comprising a throughput determiner configured to determine, for each of a plurality of signal-to-noise ratio measures, a relation between a throughput prediction and a quantization step size, an estimator configured to estimate a distribution of the signal-to-noise ratio measures in a received signal, a weigher configured to determine a weight for each signal-to-noise ratio measure based on the estimated distribution and weigh the throughput predictions based on the determined weights, a quantization controller configured to determine a quantization step size based on a combination of the weighted throughput predictions and a demodulator configured to demodulate the received signal and quantize the demodulated received signal using the quantization step size.

**FIG 7**

**Description**

**Technical Field**

Exemplary implementations described herein generally relate to communication devices and methods for processing a received signal.

**Background**

In data processing, due to bit-width restrictions, high-resolution data often needs to be quantized to lower resolution. One example are log-likelihood ratios (LLR) as they are generated in the demodulation of a signal received via radio communication. In such a case the quantization has a high impact on system performance (e.g. the achieved throughput of the radio communication) and therefore, efficient approaches for controlling the quantization and processing a received signal accordingly are desirable.

**Brief Description of the Drawings**

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a communication arrangement including a transmitter and a receiver.
Figure 2 illustrates a quantization of LLR values.
Figure 3 illustrates an LLR quantizer.
Figure 4 illustrates a quantization step size controller.
Figure 5 illustrates a mutual information look-up table.
Figure 6 depicts the distance spectrum of Gray symbol mapping for 16 QAM and 64 QAM modulations.
Figure 7 shows a communication device according to various examples.
Figure 8 shows a flow diagram illustrating a method for processing a received signal, for example carried out by a communication device.

**Description of Exemplary Implementations**

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

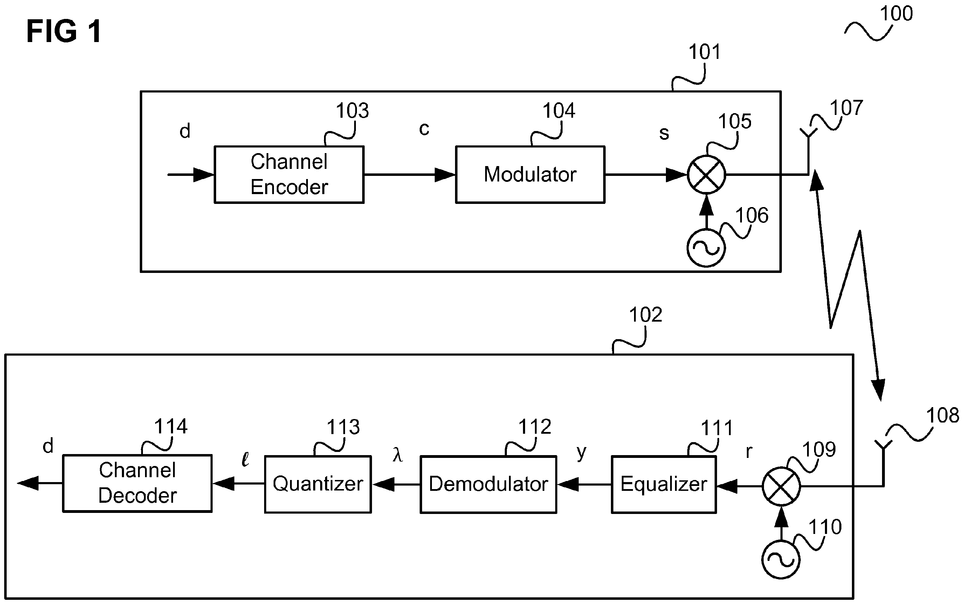

Figure 1 shows a communication arrangement 100 including a transmitter 101 and a receiver 102.

On the transmitter side, data to be transmitted d (including a plurality of bits) are supplied to a channel encoder 103 which generates encoded data c. The encoded data c are supplied to a modulator 104 which maps the encoded data to one or more modulation symbols s. A mixer 105 modulates a carrier whose carrier frequency is provided by an oscillator 106 according to the modulation symbols s. The modulated carrier is supplied to a transmit antenna 107 which sends the modulated carrier.

On the receiver side, a receive antenna 108 receives the modulated carrier. A mixer 109 extracts the received modulation symbols r from the modulated carrier using the carrier frequency provided by an oscillator 110. An equalizer 111 equalizes the received modulation symbols r and a demodulator 112 generates soft values $\lambda$ from the equalized received modulation symbols y. A quantizer 113 quantizes the soft values $\lambda$ and a channel decoder 114 generates received data which is ideally equal to the data to be transmitted d, from the quantized soft values $\ell$.

The demodulator 112 at the receiver side generates soft-values $\lambda$ quantifying the reliability of a received bit (of the received coded data). Ideally, the soft-values $\lambda$ correspond to so-called log-likelihood ratios (LLR), where a LLR is defined by the logarithm of the ratio of the conditioned probability that a certain transmitted bit is 0 divided by the counter-probability that the transmitted bit is 1. In a practical receiver implementation, each soft-value $\lambda$ is represented by a limited number of bits (typically between 4 and 8 bit), i.e. the demodulator outputs are quantized by quantizer 113. Link-level simulations show that proper quantization of the soft-values is crucial for the system performance.

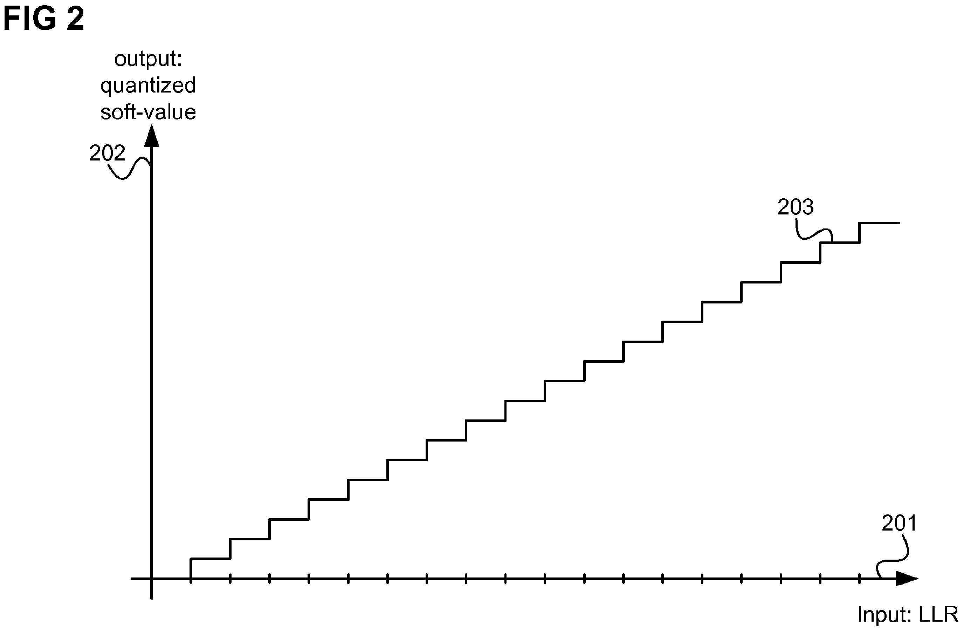

Figure 2 illustrates a quantization of LLR values.

The size of an input LLR value (before quantization) increases from left right along the x-axis 201. The size of the output quantized soft-value increases from bottom to top along the y-axis 202. A graph 203 specifies for each input LLR value the output quantized soft-value.

The graph 203 is a step curve. The distance between the steps is given by the quantization step size (which may or may not be constant over the region of possible input LLRs). The little vertical lines on the x-axis 201 indicate the beginning of the steps, such that the spacing of the vertical lines corresponds to the quantization step size. The corresponding positions on the x-axis (and the corresponding soft values) can be seen as the quantization grid of the quantization.

One option for quantization is a static LLR quantization (i.e. quantization of LLR ratios). In this case, the quantization grid (defining the quantization steps) is static regardless of modulation order (e.g. corresponding to QPSK (quadrature phase shift keying, 16-QAM (quadrature amplitude modulation), 64-QAM, ...), SNR (signal to noise ratio) or other parameters. This approach, however, disregards crucial system parameters and therefore it is sub-optimal in many scenarios of practical interest.

In a heuristic approach the LLR quantization grid is selected from a look-up table (LUT) which may depend on several parameters e.g. SNR and modulation order. The LUT is generated off-line by evaluating long simulation campaigns over typical operating scenarios. However, the adaption capability of the heuristic approach heavily depends on the scenario selection for the off-line simulation campaign which the LUT entries are derived from. The more parameter and classifiers are taken into account for the simulation campaign, the more accurate the LUT may be designed. On the other hand, huge LUTs are not desired, since they increase the memory footprint of a practical implementation. Moreover, re-calibration of the LUT might be necessary even in case of only a little change in the system (i.e. the communication arrangement 100). The huge variation of potential channel SNR profiles cannot be reasonably captured by such an approach, which is therefore inherently sub-optimal in many real-life scenarios.

In the following, approaches are described which allow optimizing the uniform quantization of the LLRs in order to maximize the system performance. The mutual information (MI) between source (transmitter 101) and destination (receiver 102) is used as the optimization criterion. The mutual information can be seen as a throughput prediction of the data communication from the transmitter 101 to the receiver 102. An LLR quantization according to various examples dynamically adapts to SNR and the SNR profile of the channel between transmitter 101 and receiver 102. According to various examples, the quantization method is based on considerations from information theory and allows increased performance.

According to various examples, the LLR quantization is adapted to the best uniform quantization dependent on modulation order and the actual channel SNR profile. Various examples provide superior utilization of the available soft-value bitwidth resolution and result in a large boost of data throughput performance. In certain scenarios a gain of up to 2 dB SNR compared to conventional approaches has been observed by link-level simulations. The quantization according to various examples adapts optimally to the modulation order, SNR and instantaneous channel power profile, which are typically the key parameters for this purpose.

In the following, an approach for determining an optimal LLR quantization according to an example is described. It should be noted that the example is described for a uniform quantization grid, i.e. to a grid with equidistant quantization steps and levels. However, the approach can be easily generalized to non-uniform quantization grids.

Let

$$\lambda_k = \log(p(b_k = 1|y_n)) - \log(p(b_k = 0|y_n)) \qquad (1)$$

be a LLR in the continuous number domain where $b_k$ is the *k*-th element of a transmitted binary sequence (e.g. of coded data c), $y_n$ is the corresponding observation (namely the received symbol) at instance *n* (i.e. n is the index of the sequence of observations) and $p(x|y)$ denotes the conditional probability of the event x given the event *y*.

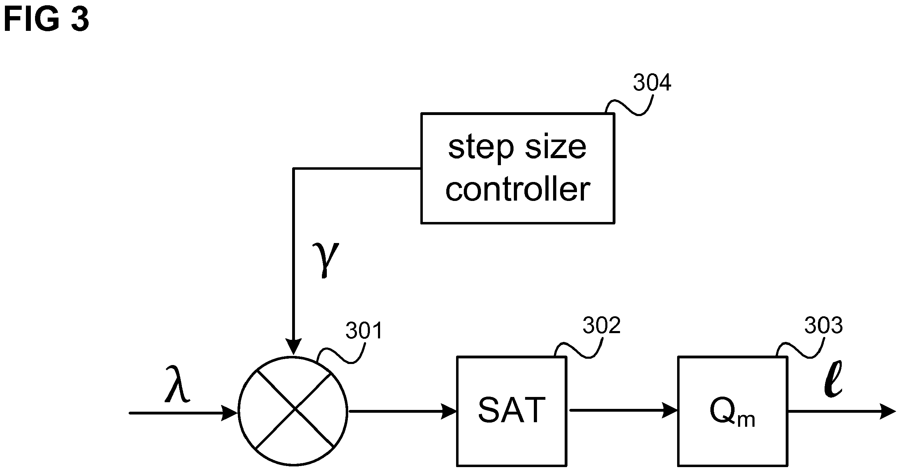

The continuous LLR $\lambda_k$ is mapped onto an integer representation $\ell_k$ with bitwidth M as depicted in figure 3.

Figure 3 illustrates an LLR quantizer 300.

The quantizer 300 for example corresponds to the quantizer 113. It includes a multiplier 301 which multiplies the $\lambda_k$ with a scaling factor $\gamma$. The scaling factor $\gamma$ can be seen to define the quantization step size. The output of the multiplier 301 is supplied to a saturator 302 which may limit the output of the multiplier 301 and then to a quantization block 303 which generates the output $\ell_k$.

Considering a symmetric integer alphabet including zero, e.g. the countable finite set $\mathcal{L} = \{2^{M-1} - 1 - m \mid m \in \{0, \cdots, 2^M - 2\}\}$, where M is the bitwidth and $L_m$ is the m-th element, the quantization towards integer $\ell_k$ can be expressed as

$$\ell_k = L_m \quad \text{for} \quad g_m < \gamma\lambda_k \le g_{m+1} \qquad (2)$$

where $\gamma$ the scaling factor. The boundaries $g_m$ delimit the catchment (or mapping) region per quantization level $L_m$ and are given by

$$g_m = \begin{cases} -\infty & : \quad m = 0 \\ \dfrac{L_m + L_{m+1}}{2} & : \quad m = 1, \cdots, 2^M - 2 \\ \infty & : \quad m = 2^M - 1 \end{cases} \qquad (3)$$

The quantized integer soft-values $\ell_k$ are further processed by the channel decoder 114.

According to various examples, the LLR scaling factor $\gamma$ is determined, e.g. by a quantization step size controller 304 of the quantizer, and set such that the soft-values are optimally quantized for the processing of the subsequent channel decoder 114, i.e. the LLR scaling factor $\gamma$ is selected to maximize the data throughput of the communication between transmitter 101 and receiver 102. It should be noted that this may be an optimization (maximization) based on the information that the receiver 102 has, in particular the knowledge of the SNR profile of the transmission between transmitter 101 and receiver 102. Accordingly, an optimum scaling factor may not correspond to the true optimum scaling factor since the real situation may differ from the information the receiver 102 has, e.g. due to limitations of measurements, requirements to perform estimations etc. The optimization may thus be understood as an optimization according to the criterion which the receiver 102 applies (including the information that the receiver 102 has).

Without loss of generality, it is assumed in the following that the quantization grid is constant for all soft values belonging to the same code block (of the code used by channel encoder 103). It should be noted that such a code block may contain a large number of bits. For instance, in case of data communication between transmitter 101 and receiver 102 according to LTE (Long Term Evolution) the block size of encoded bits may be up to 6144 bits. The bits are mapped onto symbols and each symbol may experience different channel conditions, i.e. different SNRs.

It is further assumed that the quantization step controller 304 has the following inputs available for determining the scaling factor $\gamma$.

- SNR profile of the channel: Given a certain SNR grid (e.g. a grid stepping from -10 dB to 32 dB in 3 dB steps) it is assumed that in the receiver 102 a normalized histogram with respect to the channel SNR statistics is available. A histogram bin is denoted by $h(n) \in [0,1]$ where $n = 0, \cdots, N - 1$ is the index of a SNR grid point and due to normalization the relation $\sum_n h(n) = 1$ holds. For an LTE system (including transmitter 101 and receiver 102), the receiver 102 may determine the SNR histogram over all resource elements (RE) to which the bits belonging to a given code block are mapped.
- The bit to symbol mapping scheme, e.g. QPSK, 16-QAM, 64-QAM, etc, in particular the modulation index. The modulation index is denoted by $q$, being $4^q$ the number of constellation points per symbol.

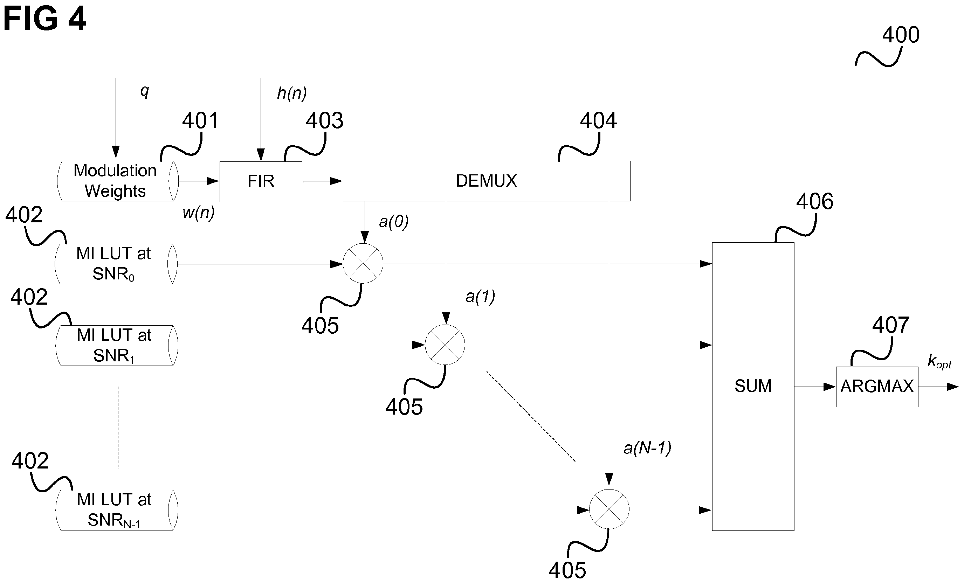

Figure 4 illustrates a quantization step size controller 400.

The quantization step size controller 400 for example corresponds to the quantization step size controller 304 of the quantizer 300. It determines (as its single output) an optimum scaling factor $\gamma$ in the form of a scaling factor index $k_{\text{opt}}$. For example, there is a set of possible scaling factors and $k_{\text{opt}}$ is the index of optimum one (in terms of the selection or optimization criterion based on which the quantization step size controller 400 determines the scaling factor).

The quantization step size controller 400 includes a modulation weight buffer 401 which contains modulation specific weights (MSW) as described further below.

Further, the quantization step size controller 400 includes MI LUT (mutual information look-up table) buffers 402 which contain SNR specific look-up tables mapping the quantized scaling factor $\gamma$ onto a mutual information.

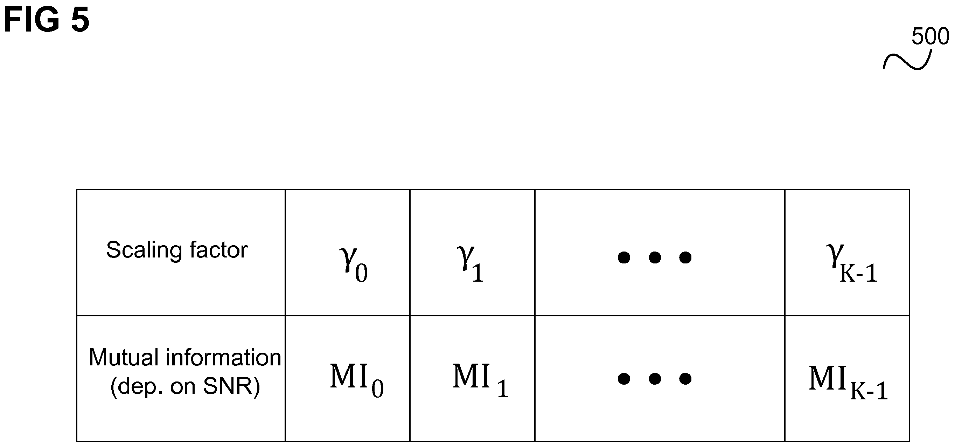

Figure 5 illustrates a mutual information look-up table 500.

The look-up table 500 is specific for an SNR and includes, for each possible scaling factor $\gamma_0, ..., \gamma_K$, the mutual information between transmitter 101 and receiver 102 which is achieved for the scaling factor at the SNR specific for the look-up table 500.

It is assumed that the possible scaling factors $\gamma$ are covering a reasonable range, e.g. from -4 to 4 in the log2 domain, and are quantized such that $K$ different quantization levels (i.e. K possible scaling factors) are existing, i.e. the LUT size per SNR value is $K$.

The arrows in figure 4 illustrate the data flow of the calculation of the index of the optimum scaling factor $\gamma$.

A set of MSW $w_q(v)$ with respect to the modulation order q is drawn out of modulation weight buffer 401.

A FIR (finite input response) filter 403 convolves the MSW $w_q(v)$ and histogram bins $h(n)$ to obtain the effective weights $a(n)$ per (SNR) branch $n$ according to

$$a(n) = \sum_{v=0}^{N-1} h(n - v)w_q(v) \qquad\qquad (4)$$

A demultiplexer 404 demultiplexes the obtained weights and distributes them (according to their indexes) to the different (SNR) branches, where they are multiplied by respective multipliers 405 with the MI (mutual information) values provided by the corresponding MI LUT buffers 402 (for all possible values of $\gamma$). A summer 406 sums the contributions of the various branches, i.e. the outputs of the multipliers 405.

This means that for each $\gamma_k$ and for each SNR branch index n, the mutual information given for $\gamma_k$ is multiplied by a(n), and the results are summed over n. Illustratively speaking, this results in a combined MI LUT table including accumulated MI values for each $\gamma_k$, wherein each accumulated MI value is a combination of the MI values given by the MI LUT tables of buffers 402 of that $\gamma_k$, wherein in the combination the MIs of different SNRs are weighted according to the a(n).

The combined MI LUT table may also be seen as representing a combined MI curve which specifies the MI achievable for each scaling factor taking into account the SNR profile of the signal transmission between transmitter 101 and receiver 102.

In the sum calculated by the summer 406, a maximization block 407 searches the scaling factor index $k_{opt}$ of the maximum accumulated MI value.

Assuming that the MI LUT table 500 corresponds to the combined MI LUT table, i.e. the output of the summer 406, this means that the column given the maximum MI is searched and the index $k_{opt}$ of this column is output.

The modulation specific weights stored in the modulation weight buffer 401 account for the distance spectrum which is specific to a modulation and mapping scheme .

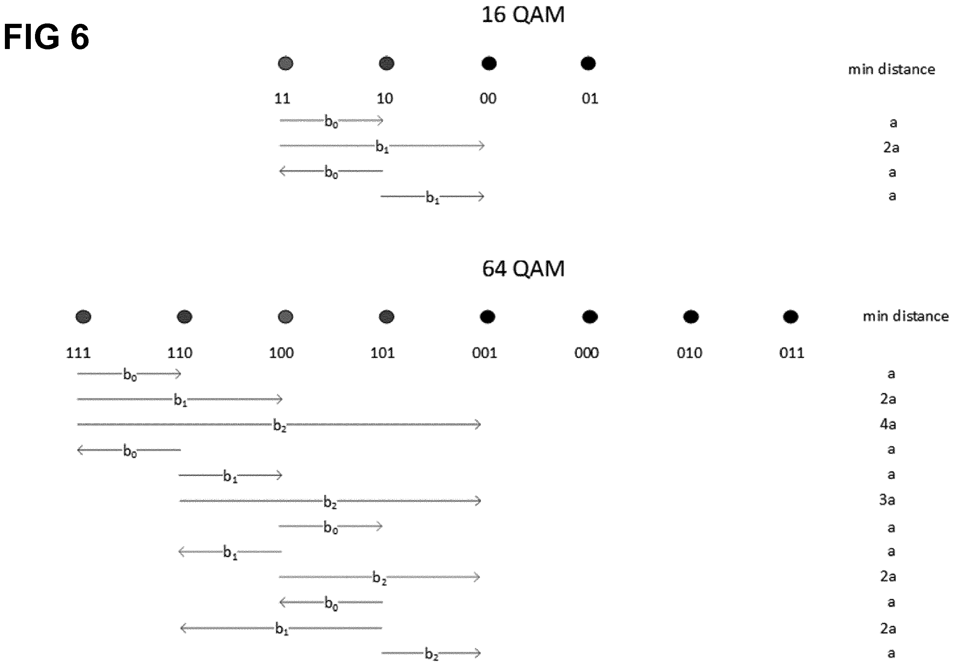

Figure 6 depicts the minimum distance spectrum of Gray symbol mapping for 16 QAM and 64 QAM modulations.

It should be noted that for illustration purposes, the minimum distance spectrum is shown only for the real components.

For each constellation point and for each bit encoded to it the distance to the closest constellation point that has the bit flipped is considered. For example, for 16 QAM, the symbol (i.e. symbol real component) 11 has a minimum distance $b_0$ = a of the LSB (least significant) bit to closest symbol where the LSB is flipped, which is the symbol 10. The distance $b_1$ = 2a is the minimum distance of the MSB (most significant bit) of the symbol 11 to the closest symbol where this bit is flipped which is the symbol 00. Similarly, the minimum distances of the symbol 10 to its closest neighbours are given in the next two lines. For 00 and 01 the situation is similar due to symmetry and is not shown win figure 6 for clarity.

Similarly, examples for minimum distances between real components of 64 QAM symbols are illustrated in figure 6.

Let denote d the integer factor applied to the minimum distance a of two adjacent symbols (i.e. for "a" in figure 6 d=1, for "2a" d=2 etc.; the normalized minimum distance $\alpha_q$ per modulation scheme is given in table 2 below), $\tilde{w}_{d,q}$ the relative number of occurrence per multiplier $d$ and $q = \log_2(Q)$ /2 is the modulation index per axis (Re/Im), with $Q$ being the modulation order (see table 2). The total number of occurrences is given by $\sum_d \tilde{w}_{d,q}$ = 1. The weights $\tilde{w}_{d,q}$ for QPSK, 16QAM, 64 QAM and 256 QAM considering Gray mapping are given in Table 1.

Table 1: weights $\tilde{w}_{d,q}$ dependent on modulation order

|  | d=1 | d=2 | d=3 | d=4 | d=5 | d=6 | d=7 | d=8 |
|---|---|---|---|---|---|---|---|---|
| QPSK | 1 | 0 | 0 | 0 | 0 | 0 | 0 | 0 |
| 16 QAM | 3/4 | 1/4 | 0 | 0 | 0 | 0 | 0 | 0 |
| 64 QAM | 7/12 | 3/12 | 1/12 | 1/12 | 0 | 0 | 0 | 0 |
| 256 QAM | 15/32 | 7/32 | 3/32 | 3/32 | 1/32 | 1/32 | 1/32 | 1/32 |

Note that these weights can be recursively derived by the rule

$$\tilde{w}_{d,q} = \begin{cases} \left(2^{q-1}(q-1)\tilde{w}_{d,q-1} + 1\right)2^{1-q}/q & : & d \in \{1,\cdots,2^{q-1}\} \\ 0 & : & \text{else} \end{cases} \qquad (5)$$

Table 2: scaling factor per modulation order

|  | $Q$ | $q$ | $\alpha_q$ |
|---|---|---|---|
| QPSK | 4 | 1 | $1/\sqrt{2}$ |
| 16 QAM | 16 | 2 | $1/\sqrt{10}$ |
| 64 QAM | 64 | 3 | $1/\sqrt{42}$ |
| 256 QAM | 256 | 4 | $1/\sqrt{170}$ |

The SNR shift associated to each weight calculates as

$$SNR_{d,q} = \left(d \cdot \alpha_q\right)^2 \qquad (6)$$

However, the SNR shifts associated to the weights are not equidistant neither may they match to the SNR grid in dB domain of the channel SNR histogram. To this end, according to one example, the MSW is resampled by the following procedure:

Let $\Delta SNR$ be the step size of the channel SNR histogram. The resampled weight associated to the SNR shift $n\Delta SNR$ is given as

$$w_q(n) = \sum_d \beta_{d,q}(n) \cdot \widetilde{w}_{d,q} \qquad (7)$$

with

$$\beta_{d,q}(n) = \max\left(0, 1 - \left|\frac{n\Delta SNR - SNR_{d,q}}{\Delta SNR}\right|\right) \qquad (8)$$

The $w_q(n)$ are the modulation weights stored in modulation weight buffer 401.

In the following, an example for the determination of the mutual information is given.

Under the assumption of an AWGN link where the two bits ($b_k$, $b_{k+1}$) via QPSK modulation are mapped onto symbol s, with $\Re\{s\}^2 = \Im\{s\}^2 = 1$, the received signal is given by

$$y = \alpha_n s + v \qquad (9)$$

where $\alpha_n$ is the square root of the SNR level associated to the n-th branch, and $v$ is zero-mean normal distributed noise with normalized mean power $E\{|v|^2\} = 1$. Consequently (see derivation below)

$$\lambda_k = 4\alpha_n\Re\{y\} \text{ and } \lambda_{k+1} = 4\alpha_n\Im\{y\} \qquad (10)$$

The LLRs are distributed bi-Gaussian composed by the superposition of the two normal distributions $\mathcal{N}\{-4\alpha_n^2, 8\alpha_n^2\}$ and $\mathcal{N}\{+4\alpha_n^2, 8\alpha_n^2\}$. Let $P_m$ denote the probability to obtain value $\ell_k = L_m$ under the condition $b_k = 0$, i.e.

$$P_m(\gamma, \alpha_n) = \frac{1}{4\gamma\alpha_n\sqrt{\pi}} \int_{g_m}^{g_{m+1}} \exp\left(-\frac{1}{16\gamma^2\alpha_n^2}(y_k\right.$$

$$\left. - 4\gamma\alpha_n^2)^2\right)dy_k \tag{11}$$

$$= Q\left(\frac{g_m}{\alpha_n\sqrt{8\gamma}} - \sqrt{2}\alpha_n\right) - Q\left(\frac{g_{m+1}}{\alpha_n\sqrt{8\gamma}} - \sqrt{2}\alpha_n\right)$$

The mutual information (MI LUT) between the source bit $b_k$ and the quantized integer soft value $\ell_k$ dependent on SNR level at branch n and scaling factor $\gamma$ can be calculated as

$$I_{\gamma,n} = \sum_{m=0}^{2^M-1} P_m(\gamma, \alpha_n) \log\left(\frac{2P_m(\gamma, \alpha_n)}{P_m(\gamma, \alpha_n) + P_{2^M-m-2}(\gamma, \alpha_n)}\right) \tag{12}$$

For the derivation of equation (10), assuming equally distributed a-priori probabilities $p(s)$ the conditioned probability density function of s given observation $y$ as defined in equation (9) with unity-variance two-dimensional noise is given by

$$p(s|y) \propto \exp(-|y - \alpha_n s|^2) \tag{13}$$

Assuming QPSK modulation where the bit pair $(b_0, b_1)$ is mapped onto symbol s via $(0, 0) \rightarrow (1 + j)$, $(0, 1) \rightarrow (1 -j)$, $(1, 0) \rightarrow (-1 + j)$ and $(1, 1) \rightarrow (-1 - j)$, bit $b_0$ stretches along the real axis and bit $b_1$ stretches along the imaginary axis. Hence, the conditioned probability density function for the individual bits are given by

$$p(b_0 = 0|y) \propto \exp(-\Re\{y - \alpha_n\}^2) \text{ and } p(b_0 = 1|y) \propto$$
$$\exp(-\Re\{y + \alpha_n\}^2) \tag{14}$$

and

$$p(b_1 = 0|y) \propto \exp(-\Im\{y - \alpha_n\}^2) \text{ and } p(b_1 = 1|y) \propto$$
$$\exp(-\Im\{y + \alpha_n\}^2) \tag{15}$$

Hence, the LLR with regard to $b_0$ calculates as

$$\lambda_0 = \log p(b_0 = 0|y) - \log p(b_0 = 1|y)$$
$$= -\Re\{y - \alpha_n\}^2 + \Re\{y + \alpha_n\}^2 \tag{16}$$
$$= 4\,\alpha_n\Re\{y\}$$

Accordingly, the LLR with regard to $b_1$ calculates as

$$\lambda_1 = \log p(b_1 = 0|y) - \log p(b_1 = 1|y) \qquad (17)$$

$$= -\Im\{y - \alpha_n\}^2 + \Im\{y + \alpha_n\}^2$$

$$= 4\,\alpha_n \Im\{y\}$$

As according to equations (14) and Eq. (15) $\Re\{y\}$ and, respectively, $\Im\{y\}$ is bi-Gaussian distributed with mean $\pm\alpha_n$ and variance 1/2, i.e. composed by the two independent normal distributions $\mathcal{N}\{+\alpha_n, 1/2\}$ and $\mathcal{N}\{-\alpha_n, 1/2\}$, the corresponding LLR $\lambda_0 = 4\alpha_n\,\Re\{y\}$ and, respectively, $\lambda_1 = 4\alpha_n\,\Im\{y\}$ (being nothing else as scaled version of the random variable $\Re\{y\}$ and, respectively, $\Im\{y\}$ ) is also bi-Gaussian distributed with mean $\pm(4\alpha_n) \cdot \alpha_n = \pm 4\alpha_n^2$ and variance $\frac{1}{2} \cdot (4\alpha_n)^2 = 8\alpha_n^2$, i.e. composed by the two normal distributions $\mathcal{N}\{+4\alpha_n^2, 8\alpha_n^2\}$ and $\mathcal{N}\{-4\alpha_n^2, 8\alpha_n^2\}$.

Simulations performed for a 2x2 LTE MIMO FDD system, 64 QAM or 256 QAM, low correlation channel profile, where the number of bits for representing quantized soft values is 4 bit shows that for a sphere decoder and a linear decoder (MMSE), gains of up to 2dB can be achieved with the approach described above illustrated in figure 4.

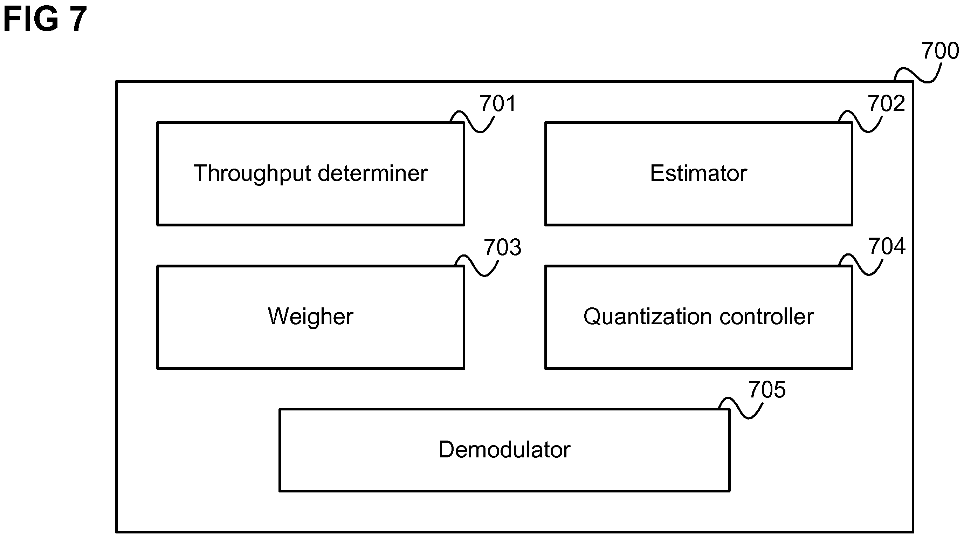

In summary, according to various embodiments, a communication device is provided as illustrated in figure 7.

Figure 7 shows a communication device 700 according to various examples.

The communication device 700 includes a throughput determiner 701 configured to determine, for each of a plurality of signal-to-noise ratio measures, a relation between a throughput prediction and a quantization step size.

The communication device 700 further includes an estimator 702 configured to estimate a distribution of the signal-to-noise ratio measures in a received signal and a weigher 703 configured to determine a weight for each signal-to-noise ratio measure based on the estimated distribution and weigh the throughput predictions based on the determined weights.

The communication device 700 further includes a quantization controller 704 configured to determine a quantization step size based on a combination of the weighted throughput predictions and a demodulator 705 configured to demodulate the received signal and quantize the demodulated received signal using the quantization step size.

According to various examples, in other words, throughput predictions (e.g. mutual information) dependent on signal-to-noise ratio are weighted according to the distribution of the various signal-to-noise ratios in a received signal. The weighted throughput predictions are combined (e.g. summed) and a quantization step size (e.g. in terms of a quantization scaling factor) is determined based on the combination. The distribution of the signal-to-noise ratios may be given by a signal-to-noise ratio profile of a signal transmission to the communication device in which the communication device receives the received signal. The communication device may include a receiver configured to receive the received signal. The signal-to-noise ratio profile may for example be determined or stored in the communication device in the form of a histogram.

The communication device 700 may for example correspond to the receiver 102. The received signal may for example be an LTE or also a 5G mobile communication signal.

The components of the communication device (e.g. the throughput determiner, the estimator, the weigher, the quantization controller and the demodulator) may for example be implemented by one or more processors. A "processor" may be understood as any kind of a logic implementing entity, which may be special purpose circuitry or a processor executing software stored in a memory, firmware, or any combination thereof. Thus a "processor" may be a hard-wired logic processor or a programmable logic processor such as a programmable processor, e.g. a microprocessor. A "processor" may also be a processor executing software, e.g. any kind of computer program. Any other kind of implementation of the respective functions which will be described in more detail below may also be understood as a "processor". The communication device may for example be at least partially be implemented by a transceiver which may for example be at least partially implemented by a modem (e.g. an LTE modem), a baseband processor or other transceiver components or also by an application processor. The communication device may for example be a communication terminal such as a portable phone and may include typical communication terminal devices such as a transceiver (including e.g. a baseband processor, one or more filters, transmit chains, receive chains, amplifiers etc.), an antenna, a subscriber identity module, an application processor, a memory, a display, a battery, a speaker, a microphone etc.

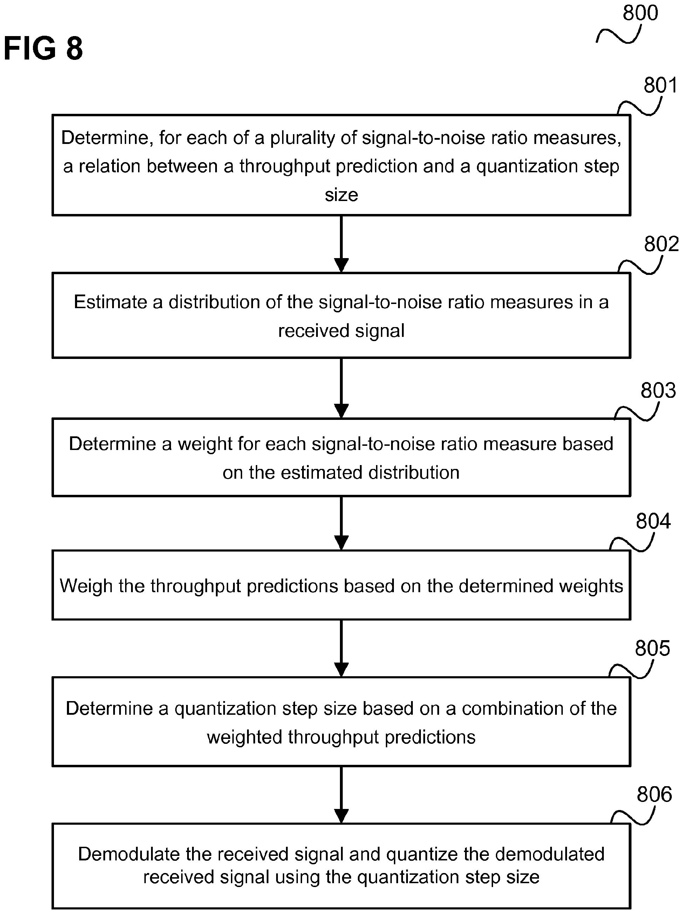

Figure 8 shows a flow diagram 800 illustrating a method for processing a received signal, for example carried out by a communication device.

In 801, the communication device determines, for each of a plurality of signal-to-noise ratio measures, a relation between a throughput prediction and a quantization step size.

In 802, the communication device estimating a distribution of the signal-to-noise ratio measures in a received signal.

In 803, the communication device determines a weight for each signal-to-noise ratio measure based on the estimated distribution.

In 804, the communication device weighs the throughput predictions based on the determined weights.

In 805, the communication device determins a quantization step size based on a combination of the weighted throughput predictions.

In 806, the communication device demodulats the received signal and quantize the demodulated received signal using the quantization step size.

The following examples pertain to further exemplary implementations.

Example 1 being a communication device as illustrated in figure 7.

In Example 2, the subject-matter of Example 1 may optionally comprise the quantization controller being configured to determining the quantization step size based on a sum of the weighted throughput predictions.

In Example 3, the subject-matter of any one of Examples 1-2 may optionally comprise the demodulator being configured to generate log-likelihood ratios by demodulation and being configured to quantize the log-likelihood ratios to soft-values.

In Example 4, the subject-matter of any one of Examples 1-3 may optionally comprise the demodulator comprising a quantizer configured to quantize the demodulated received signal using the quantization step size and the quantization controller being configured to determine the quantization step size in terms of a scaling factor of an input of the quantizer.

In Example 5, the subject-matter of any one of Examples 1-4 may optionally comprise the received signal representing data to be transmitted to the communication device and the communication device comprising a decoder configured to reconstruct the data to be transmitted from the quantized demodulated received signal.

In Example 6, the subject-matter of any one of Examples 1-5 may optionally comprise each relation between throughput prediction and quantization step size comprising a throughput prediction value for each of a plurality of quantization step sizes and the quantization controller being configured to multiply the throughput prediction values for a signal-to-noise ratio measure with the weight determined for the signal-to-noise ratio measure, to add, for each of the plurality of quantization step sizes the throughput prediction values for quantization step size over the plurality of signal-to-noise ratio measures to generate a combined relation between throughput prediction and quantization step size and to determine the quantization step size based on the combined relation.

In Example 7, the subject-matter of any one of Examples 1-6 may optionally comprise the estimator being configured to estimate the distribution of the signal-to-noise ratio measures by taking a modulation order of the received signal into account.

In Example 8, the subject-matter of any one of Examples 1-7 may optionally comprise the estimator being configured to estimate the distribution of the signal-to-noise ratio measures by performing a signal-to-noise shift of measured signal-to-noise values based on a modulation index of the received signal.

In Example 9, the subject-matter of any one of Examples 1-8 may optionally comprise the received signal being a signal received from a transmitter via a communication channel and the throughput prediction for a signal-to-noise ratio being a mutual information of the communication channel.

In Example 10, the subject-matter of any one of Examples 1-9 may optionally comprise the weigher being configured to weight a throughput prediction higher if it occurs more often in the received signal according to estimated distribution.

In Example 11, the subject-matter of any one of Examples 1-10 may optionally comprise the received signal being transmitted using a plurality of resource elements and the estimator being configured to determine the signal-to-noise ratio measure for each resource element and to determine the distribution of the signal-to-noise ratio measures based on the frequency of occurrence with which the signal-to-noise ratio measures have been determined for the resource elements.

In Example 12, the subject-matter of any one of Examples 1-11 may optionally comprise a memory storing, for each of a plurality of signal-to-noise ratio measures, a look-up table specifying the relation between a throughput prediction and a quantization step size.

In Example 13, the subject-matter of Example 12 may optionally comprise the throughput determiner being configured to generate the look-up tables or being configured to determine the relation between a throughput prediction and a quantization step size based on the stored look-up tables.

In Example 14, the subject-matter of any one of Examples 1-13 may optionally comprise the quantization controller being configured to determine the quantization step size such that it corresponds to the maximum throughput in the combination of weighted throughput predictions.

Example 15 is a method for processing a received signal as illustrated in figure 8.

In Example 16, the subject-matter of Example 15 may optionally comprise comprising determining the quantization step size based on a sum of the weighted throughput predictions.

In Example 17, the subject-matter of any one of Examples 15-16 may optionally comprise generating log-likelihood ratios by demodulation and quantizing the log-likelihood ratios to soft-values.

In Example 18, the subject-matter of any one of Examples 15-17 may optionally comprise quantizing the demodulated received signal using the quantization step size by means of a quantizer and determining the quantization step size in terms of a scaling factor of an input of the quantizer.

In Example 19, the subject-matter of any one of Examples 15-18 may optionally comprise the received signal representing data to be transmitted and the method comprising reconstructing the data to be transmitted from the quantized demodulated received signal.

In Example 20, the subject-matter of any one of Examples 15-19 may optionally comprise each relation between throughput prediction and quantization step size comprising a throughput prediction value for each of a plurality of quantization step sizes and the method comprising multiplying the throughput prediction values for a signal-to-noise ratio measure with the weight determined for the signal-to-noise ratio measure, adding, for each of the plurality of quantization step sizes the throughput prediction values for quantization step size over the plurality of signal-to-noise ratio measures to generate a combined relation between throughput prediction and quantization step size and determining the quantization step size based on the combined relation.

In Example 21, the subject-matter of any one of Examples 15-20 may optionally comprise estimating the distribution of the signal-to-noise ratio measures by taking a modulation order of the received signal into account.

In Example 22, the subject-matter of any one of Examples 15-21 may optionally comprise estimating the distribution of the signal-to-noise ratio measures by performing a signal-to-noise shift of measured signal-to-noise values based on a modulation index of the received signal.

In Example 23, the subject-matter of any one of Examples 15-22 may optionally comprise the received signal being a signal received from a transmitter via a communication channel and the throughput prediction for a signal-to-noise ratio being a mutual information of the communication channel.

In Example 24, the subject-matter of any one of Examples 15-23 may optionally comprise weighting a throughput prediction higher if it occurs more often in the received signal according to estimated distribution.

In Example 25, the subject-matter of any one of Examples 15-24 may optionally comprise the received signal being transmitted using a plurality of resource elements and the method comprising determining the signal-to-noise ratio measure for each resource element and determining the distribution of the signal-to-noise ratio measures based on the frequency of occurrence with which the signal-to-noise ratio measures have been determined for the resource elements.

In Example 26, the subject-matter of any one of Examples 15-25 may optionally comprise a memory storing, for each of a plurality of signal-to-noise ratio measures, a look-up table specifying the relation between a throughput prediction and a quantization step size.

In Example 27, the subject-matter of Example 26 may optionally comprise generating the look-up tables or determining the relation between a throughput prediction and a quantization step size based on the stored look-up tables or both.

In Example 28, the subject-matter of any one of Examples 15-27 may optionally comprise determining the quantization step size such that it corresponds to the maximum throughput in the combination of weighted throughput predictions.

According to a further example, a computer readable medium is provided comprising a memory to store instructions which make a processor, when it accesses the instructions, perform a method according to one of the above Examples.

According to a further example, a receiver is provided including

a memory storing, for each of a plurality of signal-to-noise ratios, a table specifying a throughput prediction for each of a plurality of quantization step sizes,

a quantization step size calculator configured to combine the tables by means of a weighted sum, wherein the weight of each look-up table is determined based on a frequency of occurrence of the signal-to-noise ratio of the look-up table in a signal received by the receiver and to determine a quantization step size based on the combination and

a demodulator configured to demodulate the received signal and quantize the demodulated received signal using the determined quantization step size.

According to a further example, a communication device is provided comprising a throughput determining means for determine, for each of a plurality of signal-to-noise ratio measures, a relation between a throughput prediction and a quantization step size, an estimator configured to estimate a distribution of the signal-to-noise ratio measures in a received signal, a weighing means for determining a weight for each signal-to-noise ratio measure based on the estimated distribution and weigh the throughput predictions based on the determined weights, a quantization controlling means for determining a quantization step size based on a combination of the weighted throughput predictions and a demodulating means for demodulating the received signal and quantize the demodulated received signal using the quantization step size.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

**Claims**

1.  A communication device comprising:

    a throughput determiner configured to determine, for each of a plurality of signal-to-noise ratio measures, a relation between a throughput prediction and a quantization step size;
    an estimator configured to estimate a distribution of the signal-to-noise ratio measures in a received signal;
    a weigher configured to determine a weight for each signal-to-noise ratio measure based on the estimated distribution and weigh the throughput predictions based on the determined weights;
    a quantization controller configured to determine a quantization step size based on a combination of the weighted throughput predictions; and
    a demodulator configured to demodulate the received signal and quantize the demodulated received signal using the quantization step size.

2.  The communication device of claim 1, wherein the quantization controller is configured to determining the quantization step size based on a sum of the weighted throughput predictions.

3.  The communication device of claim 1 or 2, wherein the demodulator is configured to generate log-likelihood ratios by demodulation and is configured to quantize the log-likelihood ratios to soft-values.

4.  The communication device of any one of claims 1 to 3, wherein the demodulator comprises a quantizer configured to quantize the demodulated received signal using the quantization step size and wherein the quantization controller is configured to determine the quantization step size in terms of a scaling factor of an input of the quantizer.

5.  The communication device of any one of claims 1 to 4, wherein the received signal represents data to be transmitted to the communication device and the communication device comprises a decoder configured to reconstruct the data to be transmitted from the quantized demodulated received signal.

6.  The communication device of any one of claims 1 to 5, wherein each relation between throughput prediction and quantization step size comprises a throughput prediction value for each of a plurality of quantization step sizes and the quantization controller is configured to multiply the throughput prediction values for a signal-to-noise ratio measure with the weight determined for the signal-to-noise ratio measure, to add, for each of the plurality of quantization step sizes the throughput prediction values for quantization step size over the plurality of signal-to-noise ratio measures to generate a combined relation between throughput prediction and quantization step size and to determine the quantization step size based on the combined relation.

7.  The communication device of any one of claims 1 to 6, wherein the estimator is configured to estimate the distribution of the signal-to-noise ratio measures by taking a modulation order of the received signal into account.

8.  The communication device of any one of claims 1 to 7, wherein the estimator is configured to estimate the distribution of the signal-to-noise ratio measures by performing a signal-to-noise shift of measured signal-to-noise values based on a modulation index of the received signal.

9.  The communication device of any one of claims 1 to 8, wherein the received signal is a signal received from a transmitter via a communication channel and the throughput prediction for a signal-to-noise ratio is a mutual information of the communication channel.

10. The communication device of any one of claims 1 to 9, wherein the weigher is configured to weight a throughput prediction higher if it occurs more often in the received signal according to estimated distribution.

11. The communication device of any one of claims 1 to 10, wherein the received signal is transmitted using a plurality of resource elements and the estimator is configured to determine the signal-to-noise ratio measure for each resource element and to determine the distribution of the signal-to-noise ratio measures based on the frequency of occurrence with which the signal-to-noise ratio measures have been determined for the resource elements.

12. The communication device of any one of claims 1 to 11, comprising a memory storing, for each of a plurality of signal-to-noise ratio measures, a look-up table specifying the relation between a throughput prediction and a quantization step size.

13. The communication device of claim 12, wherein the throughput determiner is configured to generate the look-up tables or is configured to determine the relation between a throughput prediction and a quantization step size based on the stored look-up tables.

14. The communication device of any one of claims 1 to 13, wherein the quantization controller is configured to determine the quantization step size such that it corresponds to the maximum throughput in the combination of weighted throughput predictions.

15. A method for processing a received signal comprising:

Determining, for each of a plurality of signal-to-noise ratio measures, a relation between a throughput prediction and a quantization step size;
Estimating a distribution of the signal-to-noise ratio measures in a received signal;
Determining a weight for each signal-to-noise ratio measure based on the estimated distribution;
Weighing the throughput predictions based on the determined weights;
Determining a quantization step size based on a combination of the weighted throughput predictions;
Demodulating the received signal and quantize the demodulated received signal using the quantization step size.

FIG 1

EP 3 618 377 A1

**FIG 2**

output:
quantized
soft-value

202

203

201

Input: LLR

EP 3 618 377 A1

**FIG 3**

FIG 4

400

401 Modulation Weights

$q$

$w(n)$

403 FIR

$h(n)$

404 DEMUX

$a(0)$

$a(1)$

$a(N-1)$

405

406 SUM

407 ARGMAX

$k_{opt}$

402 MI LUT at $SNR_0$

402 MI LUT at $SNR_1$

402 MI LUT at $SNR_{N-1}$

# FIG 5

500

| Scaling factor | $\gamma_0$ | $\gamma_1$ | $\bullet\ \bullet\ \bullet$ | $\gamma_{K-1}$ |
|---|---|---|---|---|
| Mutual information (dep. on SNR) | $MI_0$ | $MI_1$ | $\bullet\ \bullet\ \bullet$ | $MI_{K-1}$ |

**FIG 6**

16 QAM

min distance

11    10    00    01

$b_0$ → a

$b_1$ → 2a

← $b_0$ a

$b_1$ → a

64 QAM

min distance

111    110    100    101    001    000    010    011

$b_0$ → a

$b_1$ → 2a

$b_2$ → 4a

← $b_0$ a

$b_1$ → a

$b_2$ → 3a

$b_0$ → a

← $b_1$ a

$b_2$ → 2a

← $b_0$ a

← $b_1$ 2a

$b_2$ → a

# FIG 7

EP 3 618 377 A1

# FIG 8

800

801

Determine, for each of a plurality of signal-to-noise ratio measures, a relation between a throughput prediction and a quantization step size

802

Estimate a distribution of the signal-to-noise ratio measures in a received signal

803

Determine a weight for each signal-to-noise ratio measure based on the estimated distribution

804

Weigh the throughput predictions based on the determined weights

805

Determine a quantization step size based on a combination of the weighted throughput predictions

806

Demodulate the received signal and quantize the demodulated received signal using the quantization step size

Europäisches
Patentamt
European
Patent Office
Office européen
des brevets

# EUROPEAN SEARCH REPORT

Application Number

EP 18 19 1486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 088 725 A1 (ERICSSON TELEFON AB L M [SE]) 12 August 2009 (2009-08-12)<br>* paragraph [0026] *<br>* paragraph [0034] - paragraph [0040] *<br>* figure 1A *<br>* figure 1B *<br>* figure 3A *<br>* figure 4 *<br>* figure 3B *<br>----- | 1-5,9,<br>12,13,15<br>6-8,10,<br>11,14 | INV.<br>H04L25/06 |
| A | US 8 270 543 B1 (FATTAL SHAHAR [IL] ET AL) 18 September 2012 (2012-09-18)<br>* figure 1 *<br>----- | 1-15 | |

TECHNICAL FIELDS
SEARCHED      (IPC)

H04L

The present search report has been drawn up for all claims

| Place of search | Date of completion of the search | Examiner |
|---|---|---|
| Munich | 22 February 2019 | Baltersee, Jens |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 19 1486

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2019

| Patent document cited in search report | | Publication date | Patent family member(s) | | Publication date |
|---|---|---|---|---|---|
| EP 2088725 | A1 | 12-08-2009 | EP | 2088725 A1 | 12-08-2009 |
| | | | JP | 5667881 B2 | 12-02-2015 |
| | | | JP | 2011512092 A | 14-04-2011 |
| | | | MY | 156910 A | 15-04-2016 |
| | | | US | 2010309810 A1 | 09-12-2010 |
| | | | WO | 2009101049 A2 | 20-08-2009 |
| US 8270543 | B1 | 18-09-2012 | US | 8270543 B1 | 18-09-2012 |
| | | | US | 8472568 B1 | 25-06-2013 |

EPO FORM P0459

For more details about this annex : see Official Journal of the European Patent Office, No. 12/82